# EUROPÄISCHE PATENTSCHRIFT

(11) **EP 1 161 293 B1**
(45) Veröffentlichungstag und Bekanntmachung des Hinweises auf die Patenterteilung: **04.06.2003**
(21) Anmeldenummer: 00926730.3
(22) Anmeldetag: 02.03.2000
(51) Int. Cl.: B01D 46/04

(54) **REINIGUNGSVORRICHTUNG**
CLEANING DEVICE
DISPOSITIF DE NETTOYAGE

(30) Priorität: 02.03.1999 DE 19909075
(43) Veröffentlichungstag der Anmeldung: 12.12.2001
(73) Patentinhaber: Disa A/S, 2730 Herlev (DK)
(72) Erfinder: Bihlet, Klaus, DK-8983 Gjerlev (DK); Bishop, Angus J., York North Yorkshire YO23 2SQ (GB)
(74) Vertreter: Patentanwälte Leinweber & Zimmermann
(86) Internationale Anmeldenummer: EP0001801
(87) Internationale Veröffentlichungsnummer: WO00051709

(56) Entgegenhaltungen:
- EP-A- 0 531 657
- US-A- 4 280 826
- US-A- 4 289 511

## Beschreibung

Die Erfindung betrifft eine Vorrichtung zum Reinigen einer während eines Filterbetriebs von einem zu reinigenden Fluid durchströmten Filterfläche eines Filterelementes mit einem unter Druck stehenden Reinigungsfluid.

Derartige Vorrichtungen werden beispielsweise zur Reinigung von in Industrieanlagen benutzten Staubfiltern benötigt. Die für industrielle Zwecke eingesetzten Staubfilter sind in vielen Fällen etwa in Form von Hohlzylindern gebildet, wobei an einem Ende der Filterelemente eine Auslaßöffnung für das gereinigte Fluid, wie etwa entstaubtes Rauchgas vorgesehen ist, während eine Zylindermantelfläche des Filterelementes durch eine Filtersubstanz wie etwa eine Filtermembran oder ein Filtervlies gebildet ist. Diese Mantelfläche des Filterelementes bildet dann die Filterfläche, die während des Filterbetriebes von dem zu reinigenden Fluid, wie etwa Rauchgas durchströmt wird, wobei in dem Rauchgas enthaltene Staubteilchen von der Filtersubstanz zurückgehalten werden, um so die gewünschte Reinigungswirkung zu erreichen. Dabei trifft das zu reinigende Fluid auf die Außenfläche des Filterelementes auf und wird durch den in dem Filterelement gebildeten Hohlraum bwz. die an einem axialen Ende des Filterelementes vorgesehene Auslaßöffnung abgeleitet.

Während des oben erläuterten Filterbetriebs entsteht auf der Außenseite des Filterelementes bzw. der Filterfläche ein Filterstaub-Kuchen, durch den der Strömungswiderstand des Filterelementes für das ihn durchströmende zu reinigende Fluid mit zunehmender Betriebsdauer erhöht wird. Diese Erhöhung des Strömungswiderstandes führt zu einem Druckabfall der Fluidströmung beim Passieren des Filterelementes, der wiederum die Ableitung des gereinigten Fluids beeinträchtigt oder nur mit Hilfe einer teuren und energieaufwendigen zusätzlichen Absaugeinrichtung zuläßt.

Daher müssen die Filterflächen der Filterelemente im allgemeinen regelmäßig gereinigt werden, um so einen störungsfreien Betrieb zu gewährleisten.

Zu diesem Zweck wird üblicherweise ein unter Druck stehendes Reinigungsfluid, wie etwa Preßluft, durch die Auslaßöffnung in den Filterinnenraum eingeleitet, um so den sich auf der Außenseite des Filterelementes bzw. der Filterfläche absetzenden Filterstaub-Kuchen zu entfernen. Es hat sich jedoch gezeigt, daß die so gereinigten Filterelemente bereits nach vergleichsweise kurzen Betriebszeiten wiederum einen hohen Druckabfall der zu reinigenden Fluidströmung erzeugen. Zur Lösung dieses Problems wurde bereits vorgeschlagen, die als Reinigungsfluid eingesetzte Preßluft in Form von einzelnen Preßluftimpulsen in den Innenraum des Filterelementes einzuleiten. Ferner wurde vorgeschlagen, das Reinigungsfluid mit Hilfe von Düsen in den Innenraum des Filterelementes einzuleiten, deren Düsenöffnung einen geringeren Durchmesser aufweist als die Auslaßöffnung des Filterelementes, um so zusätzlich zu der als Reinigungsfluid eingesetzten Preßluft auch noch Umgebungsluft in den Innenraum des Filterelementes mitzureißen und das in das Filterelement eingeleitete Luftvolumen zu erhöhen.

Zur Reinigung des Filterelementes sieht die EP-A-0 531 657 eine in das offene Ende des Filterelements hineinragende, koaxial in einem Abstand zur Filterfläche angeordnete, eine Mehrzahl von Abgabeöffnungen für das Reinigungsfluid aufweisende rohrartige Verteilungseinrichtung vor.

Wenngleich mit den beschriebenen Maßnahmen eine Verbesserung der Reinigungswirkung des Reinigungsfluides erzielt werden kann, hat es sich gezeigt, daß selbst bei Einleitung des Reinigungsfluids in den Innenraum des Filterelementes in Form von einzelnen Druckimpulsen und/oder durch eine geeignete Einleitungsdüse bereits nach im Vergleich zur störungsfreien Standzeit nach erstmaliger Inbetriebnahme des Filterelementes kurzen Betriebsdauern erneut ein hoher Druckabfall der zu reinigenden Fluidströmung auftritt.

Angesichts dieser Probleme im Stand der Technik liegt der Erfindung die Aufgabe zugrunde, eine Vorrichtung der eingangs angegebenen Art bereitzustellen, die einen möglichst lang anhaltenden störungsfreien Betrieb des damit gereinigten Filterelementes ermöglicht.

Erfindungsgemäß wird diese Aufgabe durch die im Anspruch 1 aufgeführte Anordnung gelöst.

Diese Lösung geht auf die Erkenntnis zurück, daß selbst beim Einsatz von, geeigneten Düsen zur Einleitung des Reinigungsfluids in das Filterelement und bei Einleitung des Reinigungsfluids in Form von einzelnen Druckimpulsen ein Staudruck des Reinigungsfluids im Bereich des der Auslaßöffnung abgewandten axialen Endes des Filterelementes entsteht, der die Reinigung der Filterflächen im Bereich des Filterelementbodens begünstigt, jedoch eine unvollständige Reinigung der Filterfläche im Bereich der Ausgabeöffnung zur Folge hat. Daher erfolgt beim Einsatz der bekannten Reinigungsvorrichtungen lediglich nur in dem unmittelbar an den Filterelementboden angrenzenden Bereich der Filterfläche eine zufriedenstellende Reinigung. Weil dieser Bereich den geringsten Strömungswiderstand für das zu reinigende Fluid bildet, konzentriert sich die Fluidströmung nach erneuter Inbetriebnahme des gereinigten Filterelementes darauf, was wiederum die Bildung eines den Strömungswiderstand erhöhenden Filterkuchens auf diesem Bereich begünstigt, so daß sehr schnell ein eine erneute Reinigung erfordernder Verschmutzungsgrad des Filterelementes erreicht wird.

Durch die erfindungsgemäße Weiterbildung der bekannten Reinigungsvorrichtungen wird nun eine gleichmäßige Druckverteilung des Reinigungsfluids im Bereich der gesamten zu reinigenden Filterfläche erreicht, was eine gleichmäßige Reinigung der gesamten Filterfläche zur Folge hat, wodurch wiederum die Konzentration der Fluidströmung während des Filterbetriebes auf einzelne Filterflächensegmente ausgeschlossen wird. Die gleichmäßige Druckverteilung des Reinigungsfluids wird durch eine erfindungsgemäß bewirkte turbulente Strömung des durch die Öffnung des Filterelementes eingeleiteten Reinigungsfluids bewirkt. Diese turbulente Strömung wiederum wird durch die erfindungsgemäß im wesentlichen kegelstumpfmantelförmig ausgebildete Strömungsleitfläche der Verteilungseinrichtung erhalten. Daher kann durch Einsatz der erfindungsgemäßen Reinigungsvorrichtung das rasche Anwachsen eines Filterkuchens auf einzelnen Filterflächensegmenten und damit auch ein übermäßig rascher Anstieg des Strömungswiderstandes des Filterelementes während des Filterbetriebs bei konstanter Fluidströmung wirksam verhindert und die Standzeit des Filterelementes erhöht werden.

In erfindungsgemäß vorteilhafter Ausführungsform weist die Verteilungseinrichtung zweckmäßigerweise ein in eine während des Filterbetriebes einen Auslaß für das gereinigte Fluid bildende Öffnung des Filterelementes einsetzbares Verteilungselement auf. Ein derartiges Verteilungselement kann für den Reinigungsvorgang in das Filterelement eingesetzt werden, und zur Ausführung des eigentlichen Filtervorganges wieder aus dem Filterelement entfernt werden. Daneben ist jedoch auch an den Einsatz von Verteilungselementen gedacht, die auch während des Filterbetriebes in dem Filterelement verbleiben, beispielsweise im Form eines fest mit dem Filterelement verbundenen Bauelementes gebildet sind. Dabei kann sich das Verteilungselement ausgehend von der an einem axialen Ende des Filterelementes angeordneten Öffnung in den zumindest teilweise von der vorzugsweise im wesentlichen zylindermantelförmigen Zylindermantelfläche begrenzten Innenraum des Filterelementes erstrecken. Durch diese Anordnung wird insbesondere bei einem auch während des Filterbetriebes in dem Filterelement verbleibenden Verteilungselement eine besonders raumsparende Gesamtanordnung ermöglicht.

Weiterhin kann die gewünschte gleichmäßige Druckverteilung des Reinigungsfluids während des Reinigungsvorganges unter Gewährleistung einer besonders geringen Erhöhung des Strömungswiderstandes während des Filterbetriebes sichergestellt werden, wenn sich das Verteilungselement ausgehend von der Öffnung über 20 bis 70 % vorzugsweise 20 bis 50 % der axialen Länge des Filterelementes erstreckt und der Durchmesser des Verteilungselementes an seinem der Öffnung abgewandten Ende etwa 40 bis 95 % des Innendurchmessers des Filterelementes entspricht. An seinem der Öffnung des Filterelementes zugewandten Ende kann das Verteilungselement einen dem Innendurchmesser des Filterelementes bzw. der Öffnung entsprechenden oder auch einen geringfügig geringeren Durchmesser aufweisen. Falls zur Einleitung des Reinigungsfluids eine Düse eingesetzt wird, hat es sich als besonders zweckmäßig erwiesen, wenn das Verteilungselement an seinem der Öffnung des Filterelementes zugewandten Ende einen dem Durchmesser der Düse entsprechenden oder einen geringfügig größeren Durchmesser als die Düse aufweist.

Bei der vorstehend beschriebenen Ausbildung des Verteilungselementes kann ein besonders geringer Strömungswiderstand während des Filterbetriebes unter gleichzeitiger Sicherstellung der gewünschten gleichmäßigen Druckverteilung des Reinigungsfluids während des Reinigungsvorganges erreicht werden, wenn die Abmessungen des Verteilungselementes derart auf diejenigen des Filterelementes abgestimmt sind, daß das Verhältnis der Strömungseschwindigkeit des während des Filterbetriebes die Filterfläche durchströmenden und durch das in die Öffnung des Filterelementes eingesetzte Verteilungselement abgegebenen Fluids innerhalb des Verteilungselementes zu der Strömungsgeschwindigkeit des den das Verteilungselement umgebenden axialen Bereich der Filterfläche durchströmenden Fluids außerhalb des Verteilungselementes im Bereich von 0,4 bis 2,5 liegt. Damit wird einerseits die Entstehung eines hohen Staudruckes in dem zwischen dem Verteilungselement und der Filterfläche gebildeten Ringspalt im Innenraum des Filterelementes vermieden und andererseits auch die Entstehung eines übermäßigen Staudrucks innerhalb des Verteilungselementes selbst verhindert.

Zusätzlich oder alternativ zu dem vorstehend beschriebenen Verteilungselement kann die erfindungsgemäße Verteilungseinrichtung auch ein Abgabeelement für das unter Druck stehende Reinigungsfluid mit einer Mehrzahl von Abgabeöffnungen aufweisen, durch die das über eine Zuführleitung zugeführte Reinigungsfluid zur Reinigung der Filterflächen abgegeben bzw. in den Innenraum des Filterelementes eingeleitet wird. Diese Ausführungsform der erfindungsgemäßen Vorrichtung beruht auf der Erkenntnis, daß die Verwendung von mehreren Abgabeöffnungen für das Reinigungsfluid im allgemeinen einen wirksameren Reinigungsimpuls bereitstellt als die Verwendung von nur einer großen Abgabeöffnung für das Reinigungsfluid.

Insbesondere bei der zuletzt beschriebenen Ausführungsform hat es sich als besonders zweckmäßig erwiesen, wenn die Reinigungsvorrichtung ein Leitungssystem für das Reinigungsfluid aufweist, mit dem eine Mehrzahl von Filterelementen gleichzeitig gereinigt werden kann. Dabei sind dem Leitungssystem zweckmäßigerweise mindestens zwei Abgabeelemente zum Abgeben des Reinigungsfluids zur Reinigung jeweils einer Filterfläche eines Filterelementes zugeordnet, wobei eine besonders gleichmäßige Reinigungswirkung für alle während eines Reinigungsvorganges zu reinigenden Filterelemente erreicht wird, wenn das von dem durch das Reinigungssystem zugeführten Reinigungsfluid zuerst passierte Abgabeelement mehr Abgabeöffnungen aufweist als das dahinter angeordnete Abgabeelement. Der Vorteil dieser Anordnung beruht darauf, daß die durch den am hinteren Ende des Leitungssystems auftretenden Staudruck begünstigte Reinigung der während des Reinigungsvorgangs dort angeordneten Filterelemente durch die Bereitstellung von mehr Abgabeöffnungen für die während des Reinigungsvorganges im Bereich des in Strömungsrichtung betrachtet vorderen Endes des Leitungssystems angeordneten Filterelemente ausgeglichen werden kann.

Falls das Reinigungsfluid zur Reinigung der Filterflächen in Form von einzelnen Druckimpulsen, wie etwa Gasdruckimpulsen, insbesondere Preßluftimpulsen abgegeben werden soll, hat es sich als besonders zweckmäßig erwiesen, wenn das Leitungssystem nur eine zur Erzeugung der Druckimpulse ausgelegte Ventilanordnung aufweist und die einzelnen Abgabeelemente auf der Abströmseite dieser Ventilanordnung angeorndet sind. Dabei ist insbesondere auch daran gedacht, das Reinigungsfluid durch eine Düse in Richtung auf die zu reinigenden Filterflächen bzw. Filterinnenräume abzugeben.

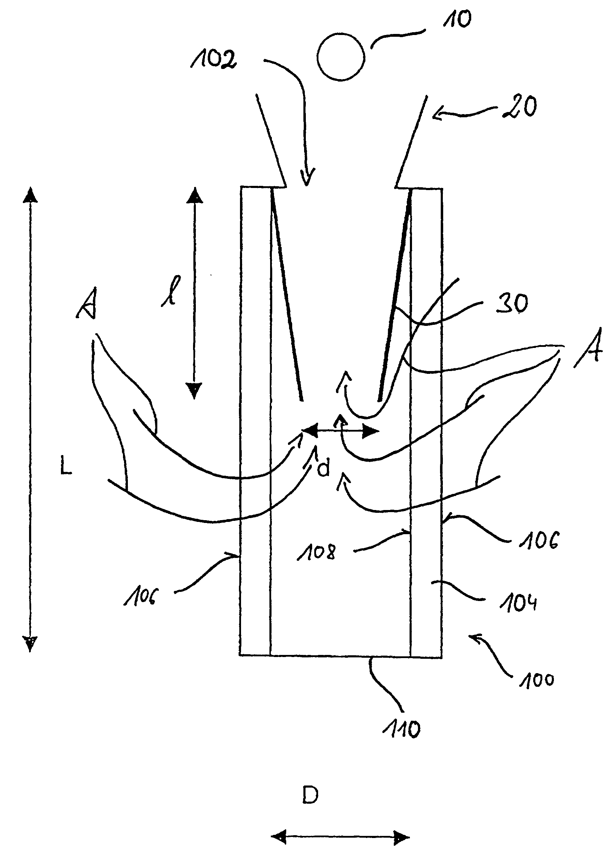

Nachstehend wird die Erfindung unter Bezugnahme auf die Zeichnung, auf die hinsichtlich aller erfindungswesentlichen und in der Beschreibung nicht weiter herausgestellten Einzelheiten ausdrücklich verwiesen wird, erläutert. In der einzigen Figur der Zeichnung ist eine erfindungsgemäße Reinigungsvorrichtung schematisch dargestellt.

Die in der Zeichnung dargestellte Reinigungsvorrichtung besteht im wesentlichen aus einem eine Abgabeöffnung für das Reinigungsfluid aufweisenden Leitungssystem 10, wie etwa einer Preßluftleitung, einer Düse 20, durch die das Reinigungsfluid, wie etwa Preßluft in den Innenraum eines insgesamt mit 100 bezeichneten Filterelementes abgegeben werden kann und einem in eine während des Filterbetriebes des Filterelementes 100 einem Auslaß für das gereinigte Fluid bildende Öffnung 102 des Filterelementes eingesetzten Verteilungselement 30.

Das mit der in der Zeichnung dargestellten Reinigungsvorrichtung zu reinigende Filterelement 100 weist im wesentlichen die Form eines Hohlzylinders auf, wobei die Auslaßöffnung 102 an einem axialen Ende des Filterelementes angeordnet ist, während die Zylindermantelfläche 106 von einem Filtermaterial 104, wie etwa einer Filtermembran oder einem Filtervlies gebildet wird. An dem der Auslaßöffnung entgegengesetzten Ende ist das Filterelement 100 mit einem Boden 110 verschlossen.

Während des normalen Filterbetriebes durchströmt das zu reinigende Fluid das Filtermaterial 104 und wird durch das in die Auslaßöffnung eingesetzte Verteilungselement 30 aus dem Filterelement 100 abgegeben, wie in der Zeichnung durch die Pfeile A angedeutet. Dabei setzt sich der von dem zu reinigenden Fluid mitgeführte Staub auf der Außenfläche 106 des Filtermaterials 104 ab.

Zur Reinigung der durch die Außenfläche 106 des Filtermaterials 104 gebildeten Filterfläche wird mit Hilfe des Leitungssystems 10 Preßluft durch die Düse 20 und das Verteilungselement 30 in den Innenraum des Filterelementes 100 eingeleitet. Dabei wird mit dem Verteilungselement 30 eine turbulente Strömung des eingeleiteten Reinigungsfluids in dem Filterinnenraum erzeugt, die zu einer gleichmäßigen Druckverteilung des Reinigungsfluids im Bereich der gesamten zu reinigenden Filterfläche 106 führt. Zu diesem Zweck ist das Verteilungselement 30 in Form eines Kegelstumpfmantels ausgeführt, der sich coaxial zur zylindermantelförmigen Außenfläche 106 des Filtermaterials 104 ausgehend von der Auslaßöffnung 102 in Richtung auf den Boden 110 erstreckt. Die axiale Länge ℓ des Verteilungselementes 30 entspricht dabei etwa 40 % der Axiallänge L des Filterelementes 100. Der Durchmesser des Verteilungselementes 30 entspricht an dem der Auslaßöffnung 102 zugewandten Ende des Verteilungselementes 30 dem Innendurchmesser D des Filterelementes 100. In Richtung auf den Boden 110 des Filterelementes 100 verjüngt sich das Verteilungselement 30 auf einen Durchmesser d der etwa 56 % des Innendurchmessers D des Filterelementes 100 entspricht.

Zur Gewährleistung einer störungsfreien Einleitung des Reinigungsfluids ist das Verteilungselement 30 an seinem der Auslaßöffnung zugewandten Ende mit einem glatten und abgerundeten Rand versehen. Andererseits ist das Auslaßelement 30 an seinem dem Boden 110 zugewandten Ende zur Sicherstellung der gewünschten turbulenten Strömung des durch die Düse 20 eingeleiteten Reinigungsfluids innerhalb des Filterelementes 100 mit einem glatt abgeschnittenen Rand versehen. Wie der Zeichnung weiter zu entnehmen ist, wird in Verbindung mit dem in das Filterelement 100 eingesetzten Verteilungselement 30 zweckmäßigerweise eine Düse 20 verwendet, deren Durchmesser an ihrem dem Filterelement 100 zugewandten Ende geringer ist als der Durchmesser des Verteilungselementes 30 an dessen der Auslaßöffnung zugewandten Ende.

Durch die beschriebene Abstimmung der Abmessungen des Verteilungselementes 30 auf die Abmessungen des Filterelementes 100 wird sichergestellt, daß das Verhältnis der Geschwindigkeit des das Filtermaterial 104 während des normalen Filterbetriebs durchströmenden Fluids innerhalb des Verteilungselementes 30 zu der Geschwindigkeit des das Filtermaterial 104 durchströmenden Fluids in dem zwischen der äußeren Begrenzungsfläche des Verteilungselementes 30 und der inneren Begrenzungsfläche 108 des Filtermaterials 104 gebildeten Ringspalt im Bereich von 0,4 bis 2,5 liegt, so daß während des Filterbetriebes ein geringer Strömungswiderstand des Filterelementes sichergestellt wird, selbst wenn das Verteilungselement 30 während des Filterbetriebes im Innenraum des Filterelementes 100 verbleibt.

Die Erfindung ist nicht auf das anhand der Zeichnung erläuterte Ausführungsbeispiel beschränkt. Vielmehr ist auch daran gedacht, zum Erhalt einer gleichmäßigen Druckverteilung des Reinigungsfluids im Bereich der gesamten zu reinigenden Filterfläche ein zum Abgeben des Reinigungsfluids ausgelegtes Abgabeelement mit einer Mehrzahl von Abgabeöffnungen einzusetzen. Ferner kann anstelle eines kegelstumpfmantelförmigen Verteilungselementes auch ein zylindermantelförmiges Verteilungselement eingesetzt werden. Darüber hinaus kann anstelle des im Bereich des inneren Randes der Auslaßöffnung festgelegten Verteilungselementes auch ein das axiale Ende des Filterelementes 100 übergreifendes Verteilungselement eingesetzt werden.

## Patentansprüche

1. Anordnung mit einem Filterelement und einer Vorrichtung zum Reinigen einer während eines Filterbetriebes von einem zu reinigenden fluid durchströmten im wesentlichen zylindermantelförmigen Filterfläche (106) des Filterelementes (100) mit einem unter Druck stehenden Reinigungsfluid, wobei eine eine Strömungsleitfläche für das aus einer Druckleitung austretende Reinigungsfluid aufweisende Verteilungseinrichtung (30) vorgesehen ist, mit der eine im wesentlichen gleichmäßige Druckverteilung des Reinigungsfluides im Bereich der gesamten zu reinigenden Filterfläche gefördert wird, wobei die Strömungsleitfläche koaxial zu der Filterfläche verläuft, im wesentlichen kegelstumpfmantelförmig gebildet ist und sich ausgehend von einer an einem axialen Ende des Fllterelementes angeordneten Öffnung über 20 bis 70 % der axialen Länge des Filterelementes erstreckt.

2. Anordnung nach Anspruch 1, **dadurch gekennzeichnet, daß** die Verteilungseinrichtung ein in eine während des Filterbetriebes einen Auslaß für das gereinigte Fluid bildende Öffnung des Filterelementes einsetzbares Verteilungsefement (30) aufweist.

3. Anordnung nach Anspruch 2, **dadurch gekennzeichnet, daß** sich das Verteilungselement (30) ausgehend von der Öffnung (102) über 20 bis 50 % der axialen Länge (L) des Filterelementes (100) erstreckt.

4. Anordnung nach einem der Ansprüche 2 oder 3, **dadurch gekennzeichnet, daß** der Durchmesser (d) des Verteilungselementes (30) an seinem der Öffnung (102) abgewandten Ende etwa 40 bis 95 % des Innendurchmessers (D) des Filterelementes (100) entspricht.

5. Anordnung nach einem der Ansprüche 2 bis 4, **dadurch gekennzeichnet, daß** die Abmessungen des Verteilungselementes (30) derart auf diejenigen Filterelementes (100) abgestimmt sind, daß das Verhältnis der Strömungsgeschwindigkeit des während des Filterbetriebes die Filterfläche (106) durchströmenden und durch das in die Öffnung (102) des Filterelementes (100) eingesetzte Verteilungselement (30) abgegebenen Fluids innerhalb des Verteilungselementes (30) zu der Strömungsgeschwindigkeit des den das Verteilungselement (30) umschließenden axialen Bereich der Filterfläche (106) durchströmenden Fluids außerhalb des Verteilungselementes (30) im Bereich von 0,4 bis 2,5 liegt.

6. Anordnung nach einem der vorhergehenden Ansprüche, **dadurch gekennzeichnet, daß** die Verteilungseinrichtung ein Abgabeelement für das unter Druck stehende Reinigungsffuid mit einer Mehrzahl von Abgabeöffnungen aufweist, durch die das über eine Zuführleitung zugeführte Reinigungsfluid zur Reinigung der Filterfläche abgegeben wird.

7. Anordnung nach Anspruch 6, **dadurch gekennzeichnet, daß** das Abgabeelement zum Abgeben des Reinigungsfluids in den Innenraum des Filterelementes betreibbar ist.

8. Anordnung nach einem der vorhergehenden Ansprüche, **gekennzeichnet durch** ein Leitungssystem für das Reinigungsfluid, mit dem eine Mehrzahl von Filterelementen gleichzeitig gereinigt werden kann.

9. Anordnung nach den Ansprüchen 7 und 8, **dadurch gekennzeichnet, daß** dem Leitungssystem mindestens zwei Abgabeelemente zum Abgeben des Reinigungsfluids zur Reinigung jeweils einer Filterfläche zugeordnet sind, wobei das von dem durch das Leitungssystem zugeführten Reinigungsfluid zuerst passierte Abgabeelement mehr Abgabeöffnungen aufweist als das dahinter angeordnete Abgabeelement.

10. Anordnung nach einem der vorhergehenden Ansprüche, **dadurch gekennzeichnet, daß** das Reinigungsfluid zur Reinigung der Filterfläche in Form von einzelnen Druckimpulsen, vorzugsweise Gasdruckimpulsen, besonders bevorzugt Preßluftimpulsen abgegeben wird.

11. Anordnung nach den Ansprüchen 9 und 10, **dadurch gekennzeichnet, daß** Leitungssystem eine zur Erzeugung der Druckimpulse ausgelegte Ventilanordnung aufweist und die einzelnen Abgabeelemente auf der Abströmseite der Ventilanordnung angeordnet sind.

12. Anordnung nach einem der vorhergehenden Ansprüche, **gekennzeichnet durch** mindestens eine zur Abgabe des Reinigungsfluids ausgelegte Düse.

## Claims

1. An arrangement comprising a filter element and a device for cleaning a filter surface (106) of the filter element (100) with a pressurized cleaning fluid, which filter surface is substantially in the shape of the circumferential surface of a cylinder and through which a fluid to be cleaned flows during a filtration operation, a distribution device (30) being provided which has a flow guiding surface for the cleaning fluid issuing from a pressure line, with which distribution device a substantially even pressure distribution of the cleaning fluid is promoted within the area of the entire filter surface to be cleaned, wherein the flow guiding surface extends coaxially to the filter surface, is formed substantially in the shape of the outer surface of a truncated cone and extends over 20 to 70 % of the axial length of the filter element starting from an opening arranged at one axial end of the filter element.

2. An arrangement according to Claim 1, **characterised in that** the distribution device has a distribution element (30) which may be fitted into an opening of the filter element forming an outlet for the cleaned fluid during the filtration operation.

3. An arrangement according to Claim 2, **characterised in that** the distribution element (30) extends over 20 to 50 % of the axial length (L) of the filter element (100) starting from the opening (102).

4. An arrangement according to one of Claims 2 or 3, **characterised in that** the diameter (d) of the distribution element (30) at its end directed away from the opening (102) corresponds to about 40 to 95 % of the internal diameter (D) of the filter element (100).

5. An arrangement according to one of Claims 2 to 4, **characterised in that** the dimensions of the distribution element (30) are adapted to those of the filter element (100) in such a way that the ratio of the flow velocity of the fluid flowing through the filter surface (106) during the filtration operation and delivered through the distribution element (30) fitted into the opening (102) of the filter element (100) inside the distribution element (30) to the flow velocity of the fluid flowing through the axial region of the filter surface (106) enclosing the distribution element (30) outside the distribution element (30) is in the range of 0.4 to 2.5.

6. An arrangement according to one of the preceding Claims, **characterised in that** the distribution device has a delivery element for the pressurized cleaning fluid with a plurality of delivery openings through which the cleaning fluid supplied via a supply line is delivered in order to clean the filter surface.

7. An arrangement according to Claim 6, **characterised in that** the delivery element may be operated to deliver the cleaning fluid into the interior of the filter element.

8. An arrangement according to one of the preceding Claims, **characterised by** a line system for the cleaning fluid with which a plurality of filter elements may be cleaned simultaneously.

9. An arrangement according to Claims 7 and 8, **characterised in that** at least two delivery elements for delivering the cleaning fluid to each clean one filter surface are associated with the line system, the delivery element passed through first by the cleaning fluid supplied by means of the line system having more delivery openings than the delivery element arranged thereafter.

10. An arrangement according to one of the preceding Claims, **characterised in that** the cleaning fluid for cleaning the filter surface is delivered in the form of single pressure pulses, preferably gas pressure pulses, especially preferably compressed air pulses.

11. An arrangement according to Claims 9 and 10, **characterised in that** the line system has a valve arrangement designed to produce the pressure pulses and the individual delivery elements are arranged on the outflow side of the valve arrangement.

12. An arrangement according to one of the preceding Claims, **characterised by** at least one nozzle designed to deliver the cleaning fluid.

## Revendications

1. Agencement avec un élément filtrant et un dispositif pour le nettoyage d'une face de filtration (106) de l'élément filtrant (100) sensiblement en forme d'enveloppe cylindrique, traversée pendant une opération de filtration par un fluide à purifier, avec un fluide de nettoyage sous pression, où est prévue une installation de répartition (30) présentant une face de guidage d'écoulement pour le fluide de nettoyage sortant d'un conduit sous pression, avec laquelle est encouragée une répartition de la pression sensiblement régulière du fluide de nettoyage dans la zone de toute la face de filtration à nettoyer, où la face de guidage d'écoulement s'étend coaxialement à la face de filtration, est réalisée sensiblement en forme d'enveloppe tronconique et s'étend en partant d'une ouverture disposée à une extrémité axiale de l'élément filtrant sur 20 à 70% de la longueur axiale de l'élément filtrant.

2. Agencement selon la revendication 1, **caractérisé en ce que** l'installation de répartition présente un élément de répartition (30) insérable dans une ouverture de l'élément filtrant formant pendant l'opération de filtration, une sortie pour le fluide nettoyé.

3. Agencement selon la revendication 2, **caractérisé en ce que** l'élément de répartition (30), en partant de l'ouverture (102), s'étend sur 20 à 50% de la longueur axiale (L) de l'élément filtrant (100).

4. Agencement selon l'une des revendications 2 ou 3, **caractérisé en ce que** le diamètre (d) de l'élément de répartition (30) correspond à son extrémité éloignée de l'ouverture (102) à peu près à 40 jusqu'à 95% du diamètre intérieur (D) de l'élément filtrant (100).

5. Agencement selon l'une des revendications 2 à 4, **caractérisé en ce que** les dimensions de l'élément de répartition (30) sont adaptées de telle sorte à celles de l'élément filtrant (100) que le rapport de la vitesse d'écoulement du fluide traversant pendant l'opération de filtration la face de filtration (106), émis par l'élément de répartition (30) placé dans l'ouverture (102) de l'élément filtrant (100), à l'intérieur de l'élément de répartition (30), à la vitesse d'écoulement du fluide traversant la zone axiale de la face de filtration (106) entourant l'élément de répartition (30), à l'extérieur de l'élément de répartition (30), se situe dans la plage de 0,4 à 2,5.

6. Agencement selon l'une des revendications précédentes, **caractérisé en ce que** l'installation de répartition présente un élément d'émission pour le fluide de nettoyage sous pression avec plusieurs ouvertures d'émission à travers lesquelles le fluide de nettoyage amené par un conduit d'amenée est émis pour le nettoyage de la face de filtration.

7. Agencement selon la revendication 6, **caractérisé en ce que** l'élément d'émission peut être amené à fonctionner pour émettre le fluide de nettoyage dans l'espace intérieur de l'élément filtrant.

8. Agencement selon l'une des revendications précédentes, **caractérisé par** un système de conduits pour le fluide de nettoyage au moyen duquel plusieurs éléments filtrants peuvent être nettoyés simultanément.

9. Agencement selon les revendications 7 et 8, **caractérisé en ce que** sont associés au système de conduits au moins deux éléments d'émission pour émettre le fluide de nettoyage pour le nettoyage respectivement d'une face de filtration, où l'élément d'émission traversé d'abord par le fluide de nettoyage amené par le sytème de conduits présente plus d'ouvertures d'émission que l'élément d'émission disposé en aval.

10. Agencement selon l'une des revendications précédentes, **caractérisé en ce que** le fluide de nettoyage pour le nettoyage de la face de filtration est émis sous forme d'impulsions de pression individuelles, de préférence d'impulsions de pression de gaz, notamment de préférence d'impulsions d'air comprimé.

11. Agencement selon les revendications 9 et 10, **caractérisé en ce que** le système de conduits présente un agencement de vannes conçu pour produire les impulsions de pression, et **en ce que** les éléments d'émission individuels sont disposés sur le côté d'écoulement de l'agencement de vannes.

12. Agencement selon l'une des revendications précédentes, **caractérisé par** au moins une buse conçue pour l'émission du fluide de nettoyage.
